# EUROPEAN PATENT APPLICATION

(11) **EP 2 712 244 A1**
(43) Date of publication of application: **26.03.2014**
(21) Application number: 12185221.4
(22) Date of filing: 20.09.2012
(51) Int. Cl.: H04W 52/08, H04W 52/14, H04W 52/24

(54) **Transmission power control**

(71) Applicant: Sony Mobile Communications AB, 221 88 Lund (SE)
(72) Inventor: Lundell, Patrik, SE-233 43 Svedala (SE)
(74) Representative: Östlund, Johanna

(57) **Abstract**

The present invention relates generally to communication and more specifically to techniques for power control in a wireless communication network. More particularly the present invention relates to method for controlling the radio output power in a mobile entity comprising a transmitter and a receiver for communicating with a radio base station over a communication channel, comprising receiving a message comprising an indication of a target transmit power from a base station, estimating a transmit power of said transmitter based on the received target transmit power and the actual conditions of the communication channel and adjusting (403) the transmit power of the radio transceiver in accordance with the estimation. The invention also relates to a mobile entity or a computer program comprising means for performing the method.

## Description

### TECHNICAL FIELD

The present invention relates generally to communication and more specifically to techniques for power control in a wireless communication network. More particularly the present invention relates to a method for uplink output power control in such a system and to a mobile entity for performing the method.

### BACKGROUND

Portable communication devices comprising a radio transceiver also referred to as mobile entities are widely used in various technical fields. Typical examples of mobile entitiess are a mobile telephone, a Smartphone, a laptop, or the like. Mobile entities are usually powered by one or plural batteries that frequently are rechargeable.

In today's advanced mobile entities such as smartphones, there is a continuous increase of current consumption due to the increase of CPU speed and added functionality as well as adding more and simultaneous use of frequency bands. The battery capacity is not increasing as much and that results in less talk/standby time for the end user.

Furthermore, in the advanced phones of today, the power saving algorithms of different parts of the mobile entities are already advanced, and it is difficult to make improvements, which do really affect the overall current consumption. However, the power consumed by the radio transmitter in active/speech mode in these devices is still considerable and affects the battery consumption as well as causes problems with heating of the phone.

According to the 3GPP standards the mobile phone should transmit the power level requested by the base station. There are good reasons for this implementation beside the effect of power on the battery life; e.g. to prevent interference with other mobile phones and to minimize the number of lost calls. However, the power level set by the base station is not always optimal from the terminal's point of view.

In any case, reducing the average power consumption used by the radio transmitter is still an important point to economise the power consumption of the mobile entity.

### SUMMARY OF THE INVENTION

The claimed invention is based on the assumption that quite often the base station is requesting a higher power level than absolutely needed for the given physical channel resulting in higher power consumption in the mobile entity.

The invention therefore provides for a method wherein transmission power is dynamically controlled within a tolerance interval whereby power consumption may be lowered. This is done by monitoring the conditions of the uplink (UL) channel, i.e. the channel from the mobile entity to the base station, in order to be able to keep the output power at a minimum level required for maintaining quality and throughput in the air interface.

With the above description in mind, then, an aspect of the present invention provides a method for controlling the radio output power in a mobile entity comprising a transmitter and a receiver for communicating with a radio base station over a communication channel, comprising the following steps:
- receiving a message comprising an indication of a target transmit power from a base station;
- estimating a transmit power of said transmitter based on the received target transmit power and the actual conditions of the communication channel and
- adjusting the transmit power of the radio transceiver in accordance with the estimation.

According to one aspect of the invention, the actual conditions of the communication channel is a quality parameter representing the quality of the uplink of the communication channel.

According to one aspect of the invention, the quality parameter is transmitted from the base station to the mobile entity.

According to one aspect of the invention, the quality parameter is estimated using the quality of the downlink of the communication channel.

According to one aspect of the invention, the quality parameter is a Bit Error Rate (BER) or Block Error Rate (BLER).

According to one aspect of the invention, the actual conditions comprises a position parameter.

According to one aspect of the invention, the message comprises an indication of a target transmit power is a transmit power control command.

According to one aspect of the invention, the message comprises an indication of a target transmit power is a nominal output power.

According to one aspect of the invention, the transmit power is adjusted within a given tolerance interval.

According to one aspect of the invention, it provides for a computer program including programmed instructions that when executed on a computer circuit of a mobile entity causes the mobile entity to perform the method.

According to one aspect of the invention, it provides for a mobile entity comprising:
- a radio transceiver for communicating with a base station over a communication channel;
- an output power estimator for estimating a output power of the transceiver
- a transmit power controller configured to adjust the actual transmit power of the radio transceiver in accordance with the estimation of the output power estimator wherein the mobile entity is configured to execute the method.

The invention provides for a method of controlling output power in a mobile entity, such that minimum required power is used, still maintaining quality and throughput in the air interface. Thereby power consumption may be reduced, leading to longer battery time and less heating of the mobile entity.

### BRIEF DESCRIPTION OF THE DRAWINGS

The present invention will be more readily understood through the study of the following detailed description of the embodiments/aspects together with the accompanying drawings, of which:
Fig. 1 shows cell in a wireless communication network with two mobile entities.
Fig. 2 illustrates the principle of using power levels for output power control in a wireless communication network.
Fig. 3 shows a mobile entity comprising means for controlling the output power.
Fig. 4 illustrates the method for controlling the radio output power in a mobile entity in a GSM network according to one aspect of the invention.
Fig. 5 illustrates the method for controlling the radio output power in a mobile entity in a GSM network according to another aspect of the invention.
Fig. 6 illustrates the principle of utilising the allowed interval of a given power level for output power control in a wireless communication network.
Fig. 7 illustrates the principle of closed loop power control in a UMTS network.
Fig. 8 illustrates the method for controlling the radio output power in a mobile entity in a UMTS network according to one aspect of the invention.

It should be added that the following description of the embodiments is for illustration purposes only and should not be interpreted as limiting the invention exclusively to these embodiments/aspects.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

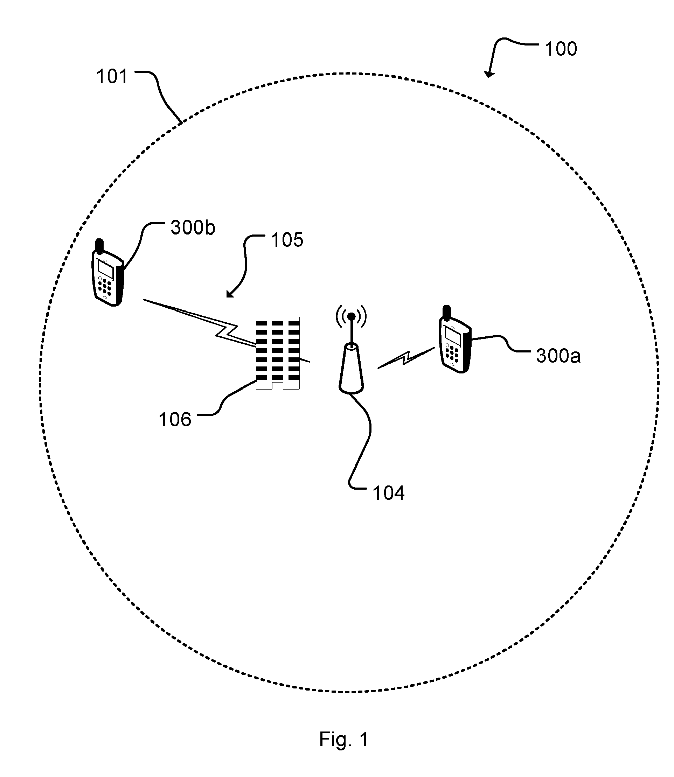

Figure 1 illustrates a cell 101 in a communications network 100, serving a number of mobile entities 300a, 300b. The number of mobile entities 300a, 300b communicates with the communication network via the radio base station 104 over a communication channel 105, which may be represented by a channel matrix **Ĥ**(q⁻¹). The channel describes how a signal propagates from the transmitter to the receiver and represents the combined effect of, for example, scattering, fading caused by reflectors in the environment surrounding a transmitter and receiver e.g. buildings 106, and power decay with distance between mobile entities 300a, 300b and base station 104. A mobile entity 300a which is positioned close to the base station 104 and where there are few reflecting elements 106 in between the mobile communication device and the base station may thus use a lower transmission power than a mobile communication device 300b located at a distance from the base station 104.

In GSM/EGDE, the base station 104 controls the power output of the mobile entities 300a, 300b, keeping the GSM power level sufficient to maintain a good signal to noise ratio, while not too high to reduce interference, overloading, and also to preserve the battery life.

In GSM/EDGE the base station controls the power of the mobile by sending a GSM "power class" number. The mobile then adjusts its power accordingly. In virtually all cases the increment between the different power level numbers is 2 dB.

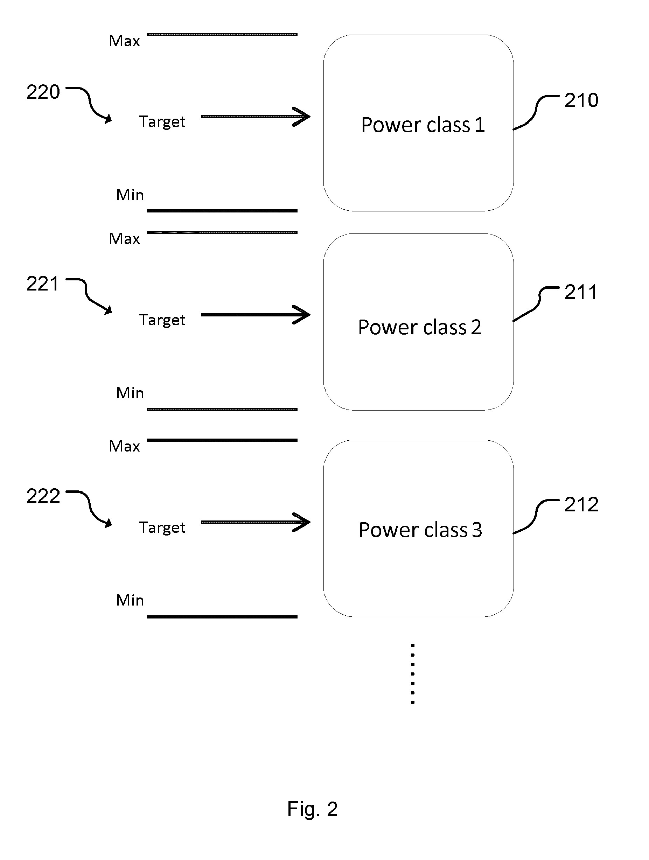

The principle of controlling power in a GSM/EDGE system using power classes for output control is illustrated in figure 2. For each power class 210, 211, 212 a corresponding target value 220, 221, 222, also referred to as nominal power value, is defined. The output power is typically allowed to vary within a defined accuracy interval defined by a min and a max value. The accuracies required for GSM power control are typically +/- 2 dB at higher power levels, whereas this relaxes to +/- 5 dB at the lower levels.

The invention will now be described in a GSM/EDGE communication network. However, it must be noted that the same principle could also be implemented in other wireless communication networks e.g. 3G or LTE as will be explained below.

The power level numbers vary according to the GSM band in use in accordance with the 3GPP specification 3GPP TS 45.005 section 4.1.1. Figures for the three main bands in use are given below:

**Table 1**

| ***GSM 400, GSM 900, GSM 850 and GSM 700*** | | | |
|---|---|---|---|
| ***Power control level*** | ***Nominal Output power (dBm)*** | ***Tolerance (dB) for conditions*** | |
| | | ***normal*** | ***Extreme*** |
| *0-2* | *39* | ±*2* | ±*2,5* |
| *3* | *37* | ±*3* | ±*4* |
| *4* | *35* | ±*3* | ±*4* |
| *5* | *33* | ±*3* | ±*4* |
| *6* | *31* | ±*3* | ±*4* |
| *7* | *29* | ±*3* | ±*4* |
| *8* | *27* | ±*3* | ±*4* |
| *9* | *25* | ±*3* | ±*4* |
| *10* | *23* | ±*3* | ±*4* |
| *11* | *21* | ±*3* | ±*4* |
| *12* | *19* | ±*3* | ±*4* |
| *13* | *17* | ±*3* | ±*4* |
| *14* | *15* | ±*3* | ±*4* |
| *15* | *13* | ±*3* | ±*4* |
| *16* | *11* | ±*5* | ±*6* |
| *17* | *9* | ±*5* | ±*6* |
| *18* | *7* | ±*5* | ±*6* |
| *19-31* | *5* | ±*5* | ±*6* |

Even if the tolerances of 2-5 dB are quite stringent, when operating at higher power levels an increase of only few dB may affect the power consumption significantly. Hence, it may be desirable to utilise the full tolerance interval more than is done today. This may be done by monitoring the characteristics of the uplink (UL) channel i.e. the channel from the mobile entity to the base station, to minimize transmission power within the tolerance interval and thereby also power consumption, while maintaining quality and throughput in the air interface.

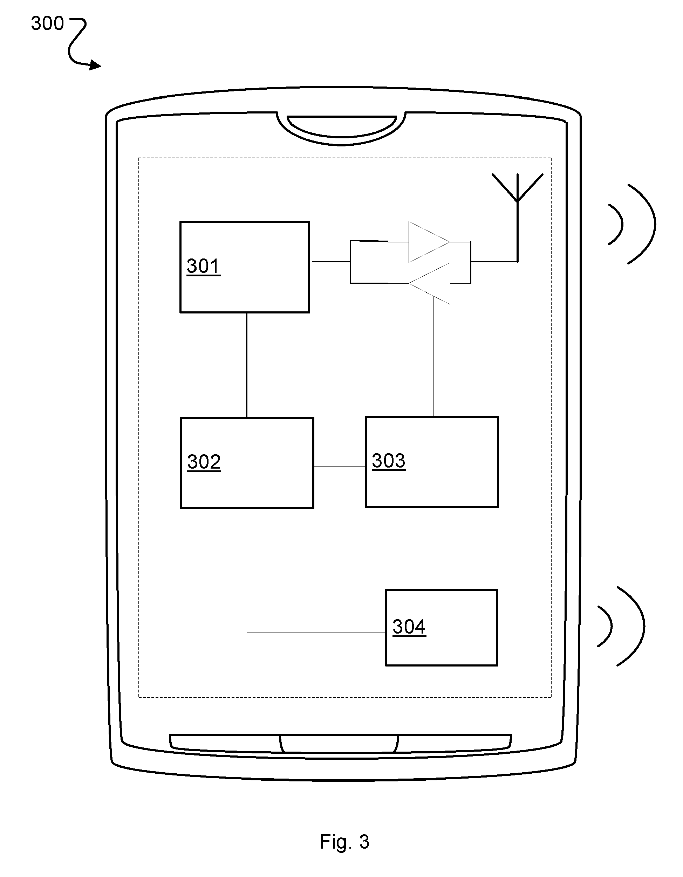

Figure 3 shows a mobile entity 300 comprising a transceiver circuit 301, an output power estimator 302, an output power controller 303 and a position circuit 304. The components represent functionality present in the mobile entity 300 and may be implemented in hardware as well as in software or in a combination thereof.

The transceiver circuit 301, comprising both a transmitter and a receiver, communicates with a base station in a mobile network. The transceiver circuit 301 is further configured to receive a message comprising an indication of a target output power of the radio transmitter.

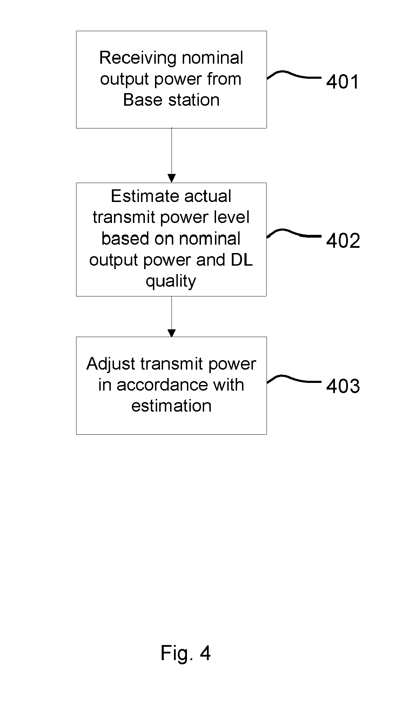

The output power estimator 302 is configured to estimate an output power of a transmitter based on the received indication of a target output power. However, the output power is not always equal to the received target output power. In contrast, the tolerance interval is utilised. According to one aspect of the invention the output power may be equal to the received target output power under certain situations or at certain conditions; e.g. at low output power, when the effect of using the interval is less. The output power is estimated based on the received target output power also utilising other information about the present channel conditions. This will be further described in figures 4, 5 and 8.

Finally, the output power controller 303 is arranged to adjust the actual output power of the radio transceiver in accordance with the estimation of the power estimator 302.

The mobile entity may also comprise a positioning circuit 304 e.g. a GPS, configured to provide position information of the mobile entity 300.

The method for controlling the output power in a mobile entity according to one aspect of the invention is now illustrated in the block diagram of figure 4. In the first step 401, the mobile entity receives a nominal output power from the base station 104. According to the invention the received nominal value will be one input parameter to the output power estimation. The next step is an estimation of actual output power 402, which will also take into account the current uplink channel conditions, in this case the channel quality. However, according to the present GSM specification, the uplink channel quality is not known to the mobile entity 300, but is calculated in the base station as e.g. Bit Error Rate (BER) or Block Error Rate (BLER).

According to this aspect of the invention the mobile entity 300 utilises the characteristics of the downlink (DL) channel, i.e. the channel from the base station to the mobile entity, as a measurement of the uplink channel, by assuming that the channel in the downlink direction is equal to the channel in the uplink direction. Hence, e.g. the BER or BLER of the downlink, which may be calculated in the transceiver circuit 301, may be used in combination with the received nominal value to estimate the output power. E.g. if the BER is above a first threshold, the output power may be the nominal power level minus 0.5 dB and if the nominal power is above a second value, then the output power may be the nominal power level minus 1 dB and so on.

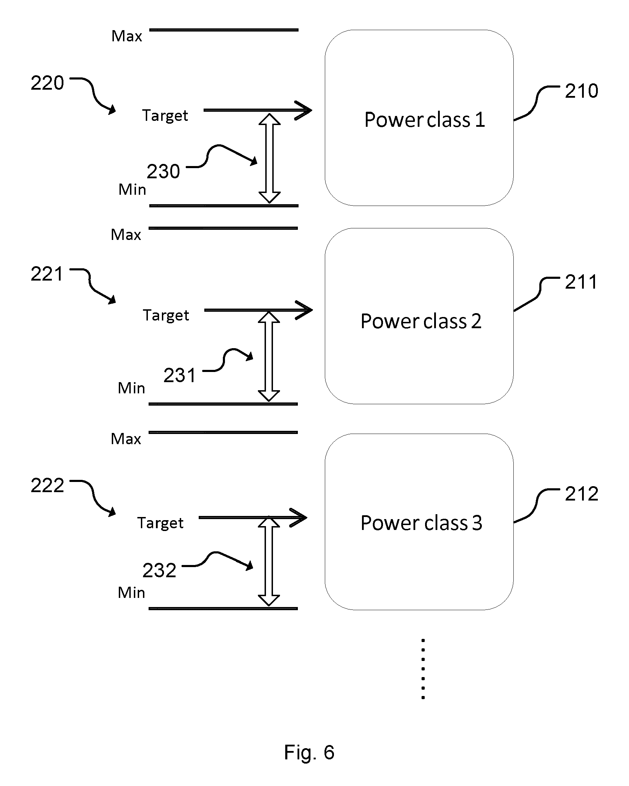

Figure 6 illustrates the principle of utilising the allowed interval of a given power level for output power control in a wireless communication network. Figure 6 illustrates the higher power classes 210, 211, 212. Each power class has a target value 220, 221, 222. However, according to the invention the output power is not set to the target value by default. Instead, the power level varies with in the tolerance interval 230, 231, 232. The size of the intervals and the steps may be adjusted as suitable under the circumstances.

In step 403, the output power is adjusted in accordance with the estimation in step 402.

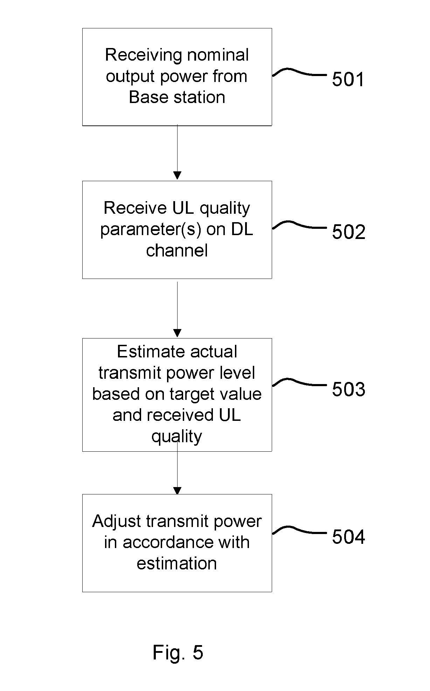

The method controlling the output power in a mobile entity according to another aspect of the invention is illustrated in the block diagram of figure 5. In the first step 501, the mobile entity receives a nominal value from the base station 104. The received nominal value will be one input parameter to the output power estimation. The output power estimation will also take into account the current transmission conditions, in this case the channel quality. The uplink channel quality is calculated in the base station e.g. as Bit Error Rate (BER) or Block Error Rate (BLER). According to this aspect of the invention the base station 104 transmits a quality parameter representing the quality of the uplink channel to the mobile entity 300. This is not in line with the present GSM specification, but is a possible change, which would require changes also in the GSM network.

The mobile entity receives 502 the BER or BLER of the uplink and uses this value in combination with the received nominal value to estimate an actual output power 503. As an example, if the BER is above a first threshold, the output power may be the nominal power level minus 0.5 dB and if the BER is above a second threshold, then the output power may be the nominal power level minus 1 dB and so on. The thresholds and the steps may be adjusted as suitable under the circumstances. The assumption is that if the channel quality is good, then power level may be decreased and still maintaining quality and throughput in the air interface.

In step 504, the output power is adjusted in accordance with the estimation in step 503.

The invention is not limited to the embodiment described above, but may be modified without departing from the scope of the claims below. UMTS has a slightly different way of controlling output power. However, the same principle may be used in a UMTS network 700.

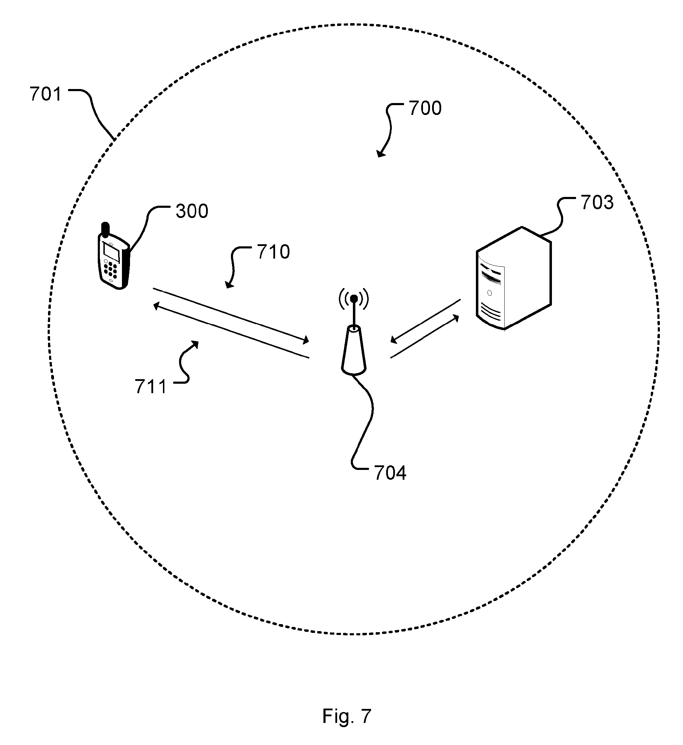

The UMTS uplink power control comprises open loop power control, inner loop power control, and outer loop power control, as illustrated in figure 7, showing a cell 701 comprising a Radio Network controller 703 and a Node B 704. A mobile entity 300 communicates with the Node B 704 over a channel 710, 711.

Open loop power control is the ability of the mobile entity 300 to set its output power to a specific value. It is used for setting initial uplink 710 and downlink 711 transmission powers when a mobile entity is accessing the network.

Outer loop power control is used to maintain the quality of communication at the level of bearer service quality requirement, while using as low power as possible. The uplink 710 outer loop power control is responsible for setting a target SIR in the Node B 704 for each individual uplink 710 inner loop power control. This target SIR is updated for each mobile entity 300 according to the estimated uplink quality (Block Error Ratio, Bit Error Ratio) for each Radio Resource Control connection.

Inner loop power control in the uplink is the ability of the mobile entity 300 to adjust its output power in accordance with one or more transmit power control commands (TPC_cmd) received in the downlink 711, in order to keep the received uplink 710 Signal-to-Interference Ratio (SIR) wherein the SIR is given by the outer loop power control target. The mobile entity transmitter is capable of changing the output power with a step size of 1, 2, and 3 dB, in the slot immediately after the TPC_cmd can be derived. Inner loop power control frequency is 1500 Hz.

The serving cell 701 estimates the SIR of the received uplink, generate TPC commands (TPC_cmd) and transmits the commands once per slot according to the following rule: if SIRₑₛₜ > SIR_{target} then the TPC command to transmit is "0", while if SIRₑₛₜ < SIR_{target} then the TPC command to transmit is "1". Upon reception of one or more TPC commands in a slot, the mobile entity 300 derives a single TPC command for each slot, combining multiple TPC commands if more than one is received in a slot. Hence, the transmitter shall have the capability of changing the output power with a step size of 1, 2 and 3 dB within in interval as defined in the 3GPP specification 3GPP TS 25.101 section 6.4.2.1.1.

**Table 2**

| **TPC_cmd** | **Transmitter power control range** | | | | | |
|---|---|---|---|---|---|---|
| | **1 dB step size** | | **2 dB step size** | | **3 dB step size** | |
| | **Lower** | **Upper** | **Lower** | **Upper** | **Lower** | **Upper** |
| + 1 | +0 5 dB | +1.5 dB | +1 dB | +3 dB | +1.5 dB | +4.5 dB |
| 0 | -0 5 dB | +0.5 dB | -0.5 dB | +0.5 dB | -0.5 dB | +0.5 dB |
| -1 | -0 5 dB | -1.5 dB | -1 dB | -3 dB | -1.5 dB | -4.5 dB |

Hence, the present invention may be implemented in the inner loop power control, because the defined step size of 1, 2 or 3 dB is considerable when operating at higher power levels and may affect the power consumption appreciably.

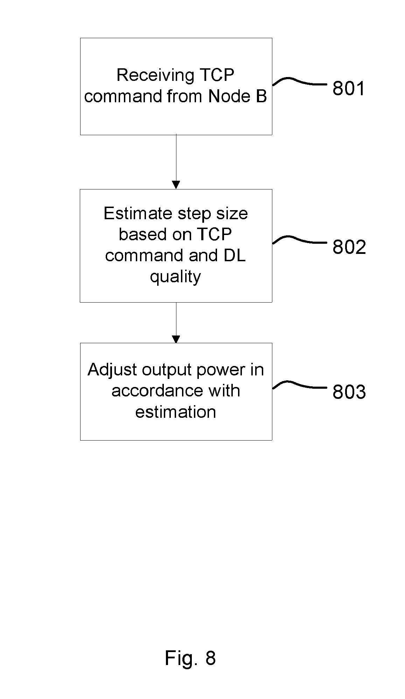

The method for controlling the radio output power in mobile entity operating in a UMTS system according to the invention is illustrated in the block diagram of figure 8. In the first step 801, the mobile entity 300 receives a TCP command from the Node B 704. According to the invention the TCP command will be one input to the power control. In the next step a step size will be calculated 704 also taking into account the current transmission conditions, in this case the channel quality. However, according to the present UMTS specification, the uplink channel quality is not known to the mobile entity 300, but is calculated in the base station e.g. as Bit Error Rate (BER) or Block Error Rate (BLER).

In the next step, the mobile entity 300 utilises the characteristics of the downlink channel 711 as a measurement of the uplink channel 710, by assuming that the channel characteristics in the downlink direction is similar to the channel characteristics in the uplink direction. Hence, e.g. the BER or BLER of the downlink 710 may be used in combination with the received nominal value to estimate the output power 802. E.g. if the BER is above a first threshold and the TCP command corresponds to a power increase of +2 dB, the output power may be adjusted with a step size of +1.75dB dB below the received step size and if the BER is above a second threshold, the output power may be adjusted with a step size of +1.5 dB and so on. The thresholds and the steps may be adjusted as suitable under the circumstances.

In step 803, the output power is adjusted in accordance with the estimation in step 802.

In accordance with another aspect of the invention a mobile entity in a UMTS network may instead use quality parameters of the uplink received from the Node B, corresponding to the method disclosed in figure 5.

In accordance with another aspect of the invention the mobile entity comprises a position circuit 304. The output power controller may then have a learning function, such that it stores the settings for frequently used positions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A method for controlling the radio output power in a mobile entity comprising a transmitter and a receiver for communicating with a radio base station over a communication channel, comprising the following steps:
- receiving (401,501,801) a message comprising an indication of a target transmit power from a base station;
- estimating (402,503,802) an actual transmit power of said transmitter based on the received target transmit power and the actual conditions of the communication channel and
- adjusting (403,503,803) the transmit power of the radio transmitter in accordance with the estimation.

2. A method according to claim 1 wherein the actual conditions of the communication channel is a quality parameter representing the quality of the uplink of the communication channel.

3. A method according to claim 2 wherein the quality parameter is transmitted from the base station to the mobile entity.

4. A method according to claim 2 wherein the quality parameter is estimated using the quality of the downlink of the communication channel.

5. A method according to any of claims 2-4 wherein the quality parameter is a Bit Error Rate (BER) or Block Error Rate (BLER).

6. A method according to claim 1 wherein the actual conditions comprises a position parameter.

7. A method according to any of claims 1-5 wherein the message comprises an indication of a target transmit power is a transmit power control command.

8. A method according to any of claims 1-5 wherein the message comprises an indication of a target transmit power is a nominal output power.

9. A method according to any of claims 1-7 wherein the transmit power is adjusted within a given tolerance interval.

10. A computer program including programmed instructions that when executed on a computer circuit of a mobile entity (300) causes the mobile entity (300) to perform the method according to any of claims 1-9.

11. A mobile entity comprising
- a radio transceiver (301) for communicating with a base station (104, 704) over a communication channel;
- an output power estimator (302) for estimating a output power of the transceiver (301)
- a transmit power controller (303) configured to adjust the actual transmit power of the radio transceiver (301) in accordance with the estimation of the output power estimator (302).
**characterized in that** the mobile entity is configured to execute the method according to any of claims 1-9.
